Europäisches Patentamt

European Patent Office

Office européen des brevets

(11) Veröffentlichungsnummer: **0 396 110**
**A2**

(12) **EUROPÄISCHE PATENTANMELDUNG**

(21) Anmeldenummer: **90108291.7**

(22) Anmeldetag: **01.05.90**

(51) Int. Cl.⁵: **G02C 5/20**

(30) Priorität: **03.05.89 DE 8905575 U**

(43) Veröffentlichungstag der Anmeldung:
**07.11.90 Patentblatt 90/45**

(84) Benannte Vertragsstaaten:
**AT BE CH DE DK ES FR GB GR IT LI LU NL SE**

(71) Anmelder: **SIPAL S.A.**
**La Doye**
**F-39400 Morez(FR)**

(72) Erfinder: **Weber, Karl**
**Brunnenwiesenstrasse 41A**
**D-7000 Stuttgart 75(DE)**

(74) Vertreter: **Dreiss, Hosenthien & Fuhlendorf**
**Gerokstrasse 6**
**D-7000 Stuttgart 1(DE)**

(54) **Längenverstellbarer Bügel für Brillen.**

(57) Ein Längenverstellbarer Bügel (10) für Brillen besitzt einen die Form eines im wesentlichen geschlossenen Hohlprofils (16) aufweisenden ersten Bügelteil (11) und einen im ersten Bügelteil (11) verschiebbar geführten zweiten Bügelteil (12) sowie eine mehrere Rasteinschnitte (37), mindestens eine Rastnase (28) und mindestens einen federnd vorgespannten Bereich (39) aufweisende Rastvorrichtung. Dabei weist der erste Bügelteil (11) die in das Hohlprofil (16) ragende Rastnase (28) und der zweite Bügelteil (12) der Rastnase (28) zugewandt die Rasteinschnitte (37) auf. Am zweiten Bügelteil (12) ist eine sich an einem der Rastnase (28) abgewandten Bereich des Hohlprofils (16) abstützende vorgespannte Feder (39) vorgesehen, entgegen deren Wirkung der Zweite Bügelteil (12) relativ zum ersten Bügelteil (11) zum Lösen der Rastvorrichtung bewegbar ist.

Bei einem derartigen Brillenbügel (10) ist die Verstellbarkeit ohne wesentlichen Kraftaufwand durch vorhergehendes einfaches Lösen der rastverbindung in einfacher und kostengünstiger Weise erreicht und die Gefahr von Beschädigungen bzw. Verbiegungen des oder der Bügelteile vermieden.

Fig.1

## Längenverstellbarer Bügel für Brillen

Die vorliegende Erfindung bezieht sich auf einen längenverstellbaren Bügel für Brillen nach dem Oberbegriff des Anspruchs 1.

Bei einem derartigen aus der DE-AS 22 12 531 bekannten längenverstellbaren Bügel ist die Rastnase am bewegbaren zweiten Bügelteil vorgesehen und die Rasteinschnitte sind an der Unterseite des Hohlprofils des ersten Bügelteils angeordnet. Durch den mit der Rastnase versehenen federnd vorgespannten Bereich des zweiten Bügelteils gelangt die Rastnase jeweils in den gegenüberliegenden Rasteinschnitt im ersten Bügelteil. Dies Längenverstellung erfolgt hierbei in der Weise, daß der erste Bügelteil festgehalten und am zweiten Bügelteil gezogen oder geschoben wird, um auf diese Weise die Rastnase, die sich in einem Rasteinschnitt befindet, aus diesem herauszuziehen oder herauszudrücken und in den nächsten Rasteinschnitt zu schieben. Da ein derartiges Lösen einer bestimmten Rastposition ausschließlich durch Kraftaufwand erfolgen muß, ist die Gefahr von Beschädigungen bzw. Verbiegungen der Bügelteile relativ groß, wenn man bedenkt, daß der Benutzer selbst eine derartige Längenverstellung vornehmen möchte. Außerdem ist es denkbar, daß bei dieser Art der kraftmäßigen Auslösung der Rastvorrichtung mit der Zeit die Verrastungskraft erlahmt und der Bügel dadurch sich unbeabsichtigt verstellen kann.

Aus der US-PS 4 544 245 ist ebenfalls ein derart wirkender längenverstellbarer Bügel bekannt, bei dem zwar die Rasteinschnitte im verschiebbaren zweiten Bügelteil und die Rastnase innerhalb des Hohlprofils des ersten Bügelteils angeordnet sind bzw. ist, bei dem jedoch der zweite Bügelteil ohne wesentliches Spiel im ersten Bügelteil geführt ist. Da aber der zweite Bügelteil keinen federnd vorgespannten Bereich besitzt, muß bzw. müssen die Rastnase und/oder die Rasteinschnitte selbst unter Aufwendung von Zug oder Druck am zweiten Bügelteil gegenüber dem ersten Bügelteil verformbar sein, um eine andere Rastposition erreichen zu können. Dieser bekannte längenverstellbare Bügel weist deshalb in noch verstärktem Maße die oben erwähnten Nachteile auf.

Außerdem ist aus dem DE-GM 85 07 200 ein längenverstellbarer Bügel bekannt, dessen erster Bügelteil aus Flachmaterial ist und an beiden parallelen Längsrändern außenseitig mit Rasteinschnitten und an seinem freien Ende mit einer Führungsöse für den zweiten Bügelteil versehen ist. Der zweite Bügelteil, der ebenfalls zumindest teilweise aus Flachmaterial ist, ist an seinem den ersten Bügelteil übergreifenden Ende mit einer geschlitzten hülsenartigen Öse versehen, die den ersten Bügelteil in vorgespannter Weise derart umgreift, daß sie in die Rasteinschnitte des ersten Bügelteils einrasten kann. Die geschlitzte hülsenartige Öse kann zwar von außen her mit einem Schraubendreher aufgeweitet werden, um eine andere Rastposition ohne wesentlichen Kraftaufwand einstellen zu können, jedoch bestehen trotzdem Probleme hinsichtlich eines möglichen Abschabens der Galvanik im Sichtbereich des ersten Bügelteils. Außerdem bedarf es für eine derartige Verstellung etwas Geschicklichkeit, wenn man ein Reiben des zweiten Bügelteils am ersten Bügelteil während der gesamten Verstellbewegung vermeiden möchte.

Aufgabe der vorliegenden Erfindung ist es, einen längenverstellbaren Bügel für Brillen der eingangs genannten Art zu schaffen, bei dem die Verstellbarkeit ohne wesentlichen Kraftaufwand durch vorhergehendes einfaches Lösen der Rastverbindung in einfacher und kostengünster Weise erreicht ist und bei dem die Gefahr von Beschädigungen bzw. Verbiegungen des oder der Bügelteile vermieden ist.

Zur Lösung dieser Aufgabe sind bei einem längenverstellbaren Bügel für Brillen der genannten Art die im Anspruch 1 angegebenen Merkmale vorgesehen.

Mit den erfindungsgemäßen Maßnahmen ist erreicht, daß durch einfachen und leichten Druck auf den zweiten Bügelteil und der damit verbundenen Relativbewegung des zweiten Bügelteils gegenüber dem ersten Bügelteil in einer Richtung, die etwa senkrecht zur Bügellängsachse verläuft, die betreffende Rastposition gelöst werden kann, so daß der zweite Bügelteil gegenüber dem ersten Bügelteil in leichter Weise, d.h. ohne Kraftaufwand in die eine oder andere Richtung zur Längenverstellung gezogen bzw. geschoben werden kann. Durch einfaches Loslassen des zweiten Bügelteils wird die neu eingestellte Position verrastet. Hierdurch sind weder Verbiegungen noch Abschabungen der Galvanik im Sichtbereich möglich.

Mit den Merkmalen des Anspruchs 2 ist eine günstigere Verstellmöglichkeit und ein größerer Verstellbereich erreicht. Entsprechendes gilt dann, wenn die Merkmale gemäß Anspruch 3 vorgesehen sind, wobei gleichzeitig eine Vergrößerung des Hebelarms zwischen Feder und Druckpunkt am betreffenden Bügelteil erreicht ist.

Vorteilhafte Ausgestaltungen hinsichtlich Herstellung und der Auswahl der Querschnittsabmessungen der beiden Bügelteile ergeben sich mit den Merkmalen des Anspruchs 4 und/oder 5 und/oder 6.

Mit den Merkmalen des Anspruchs 7 und/oder 8 ist eine Verbesserung der Verstellmöglichkeiten dahingehend erreicht, daß einerseits ein größerer Verstellbereich erreichbar ist und andererseits beim Betätigen des betreffenden Bügelteils das Außereingriffkommen der betreffenden Teile der Rastvorrichtung auch im Bereich der äußersten Verstellmöglichkeit mit Sicherheit gewährleistet ist.

Die Rastnase kann in einfacher Weise durch eine von außen in eine Bohrung des Hohlprofils einschraubbare Schraube gebildet sein. Im Hinblick auf das Aussehen des Hohlprofils ist es jedoch zweckmäßig, wenn stattdessen die Merkmale gemäß Anspruch 9 vorgesehen sind, da dadurch die Rastnase im wesentlichen unsichtbar bleibt.

Mit den Merkmalen des Anspruchs 10 ist in einfacher Weise erreicht, daß die beiden Bügelteile nach Zusammenstecken und Einbringen der Rastnase nicht mehr ohne weiteres voneinander gelöst werden können, so daß auch ein unbeabsichtigtes Auseinanderfallen der beiden Bügelteile während eines Verstellvorganges verhindert ist.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Es zeigen:

Figur 1 in teilweise abgebrochener und längsgeschnittener Seitenansicht einen längenverstellbaren Bügel gemäß einem bevorzugten Ausführungsbeispiel vorliegender Erfindung in Verriegelungsstellung,

Figur 2 einen Schnitt längs der Linie II-II der Fig. 1,

Figur 3 eine der Fig. 1 entsprechende Darstellung, jedoch in einer Position, in der die beiden Bügelteile voneinander entriegelt sind,

Figur 4 einen Schnitt längs der Linie IV-IV der Fig. 3 und

Figur 5 eine der Fig. 1 entsprechende Darstellung, jedoch in einer gegenüber dieser längenverstellten Position der beiden Bügelteile.

Der in der Zeichnung gemäß einem bevorzugten Ausführungsbeispiel vorliegender Erfindung dargestellte Brillen-Bügel 10 ist in seiner Länge verstellbar und besitzt dazu ein erstes Bügelteil 11 und ein zweites Bügelteil 12, die jeweils im wesentlichen aus Metall sind und die ineinandergeführt und relativ zueinander verschiebbar sind. Beim dargestellten Ausführungsbeispiel ist der erste Bügelteil 11 mit seinem dem zweiten Bügelteil 12 abgewandten Ende über ein nicht dargestelltes Scharnier mit einem Rahmen eines Brillengestells einer Brille oder mit einem Glas einer Brille zu verbinden. Dem gegenüber ist der zweite Bügelteil 12 mit einem im allgemeinen aus Kunststoff geformten geschweiften Bügelende 13 versehen. Dadurch ist mit dem längenverstellbaren Bügel 10 der Abstand zwischen dem Brillengestell bzw. den Brillengläsern und dem über dem Ohr des betreffenden Trägers angeordneten Bügelende 13 entsprechend der jeweiligen Kopfform des Trägers einstellbar.

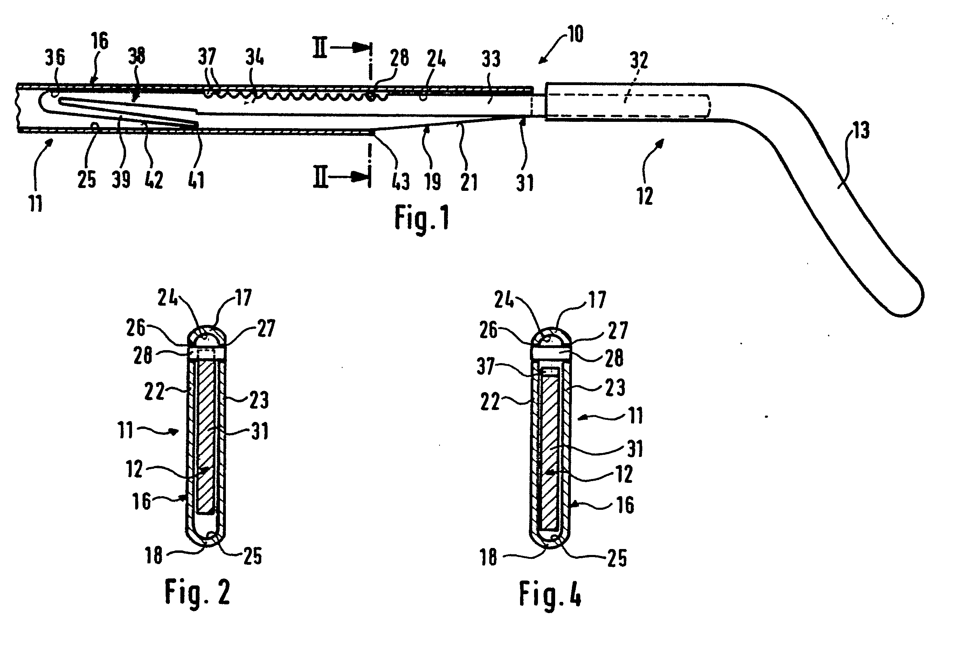

Der erste Bügelteil 11 ist im wesentlichen aus einem Hohlprofil 16 gebildet, das gemäß Fig. 2 im Querschnitt gesehen länglich rechteckförmig mit runder oberer und unterer Wand 17, 18 ist, wobei das Hohlprofil 16 sehr schmal ist. Das Hohlprofil 16 ist über einen wesentlichen Teil seiner Länge über seinen gesamten Umfang geschlossen. Lediglich in einem dem zweiten Bügelteil 12 zugewandten Bereich 19 ist das Hohlprofil 16 an seiner Unterseite offen, und zwar derart, daß durch Aufschneiden zwei parallele Schrägflächen 21 an den nach unten weisenden Längsränder der beiden Seitenwände 22 und 23 entstanden sind. Die beiden Schrägflächen 21 bewirken, daß sich die Höhe des Hohlprofils 16 zum den zweiten Bügelteil 12 hin zugewandten Ende auf etwa dreiviertel bis zweidrittel seiner ursprünglichen Höhe stetig verkürzt. Nahe der oberen Wand 17 sind die beiden Seitenwände 22, 23 des Hohlprofils 16 etwa in dem Längenabschnitt, in dem die Schrägflachen 21 beginnen, mit fluchtenden Bohrungen 26, 27 versehen, in die eine Rastnase in Form eines Stiftes 28 eingesteckt ist. Diese Rastnase 28 wird in den beiden Bohrungen 26, 27 des gezogenen Hohlprofils 16 verlötet.

Es versteht sich, daß statt des Stiftes 28 als Rastnase auch eine von der Außen- oder Innenseite des Hohlprofils 16 einschraubbare Schraube, bspw. in Form einer Madenschraube verwendet werden kann. Dabei können die Bohrungen 26, 27 als Innengewindebohrungen ausgebildet sein; es ist aber auch möglich, eine Blechschraube zu verwenden. Außerdem ist es dann möglich, auf eine der beiden Bohrung 26, 27 zu verzichten.

Der zweite Bügelteil 12 besitzt eine dünne metallische Leiste aus vorzugsweise einem Federmetall, welche Leiste 31 mit ihrem dem ersten Bügelteil 11 abgewandten Ende 32 in das Kunststoff-Bügelende 13 eingesteckt und festgehalten ist. An diesen äußeren, mit dem Bügelende 13 verbundenen Endbereich 32 schließt sich ein erster Zwischenbereich 33 an, der glatt ausgebildet ist, an diesen ein zweiter Zwischenbereich 34, der an seiner Oberkante 36 mit mehreren hintereinander angeordneten Rasteinschnitten 37 versehen ist, und an diesen ein das freie Einsteckende bildender Federteil 38 an, deren Federarm 39 vorgespannt ist und die innerhalb des Hohlprofils 16 angeordneten Zwischenbereiche 33, 34 an die Innenfläche 24 der oberen Wand 17 des Hohlprofils 16 zu drücken bestrebt ist. Die Rasteinschnitte 37 besitzen etwa eine Halbkreisform, deren Radius etwas größer ist als der Radius der Rastnase 28, die in eine der Rasteinschnitte 37 jeweils eingreift bzw. zu liegen kommt. Es versteht sich, daß es auch möglich ist, die Rasteinschnitte 37 jeweils etwas tiefer zu machen als dem Radius der Rastnase 28 entspricht.

Die genannten Bereiche 32, 33, 34, 38 der Metalleiste 38 des zweiten Bügelteils 12 können jeweils etwa dieselbe Länge aufweisen. Der innere Endbereich 38 ist derart ausgebildet, daß seine lichte Höhe einschließlich des ungespannten Federarmes 39 größer ist als die lichte Innenhöhe des Hohlprofils 16 zwischen den Innenflächen 24, 25 der oberen bzw. unteren Wand 17, 18, so daß dann, wenn der zweite Bügelteil 12 in den ersten Bügelteil 11 eingeschoben ist, der Federarm 39 vorgespannt ist. Der Federarm 39 ist bspw. als eine gegenüber dem inneren Endbereich 38 zurückgebogene Verlängerung der Leiste 31 des zweiten Bügelteils 12 zu betrachten. Ist jedoch die Leiste 31 des zweiten Bügelteils 12 aus einem metallischen Federmaterial, so ist es zweckmäßig, den zweiten Bügelteil 12 insgesamt als Stanzteil auszubilden, wobei mit dem Stanzen des zweiten Bügelteils 12 aus einem entsprechenden Metallband oder Metalleiste sowohl die Rasteinschnitte 37 als auch die Form des inneren Federteils 38 einschließlich des Federarmes 39 ausgestanzt wird.

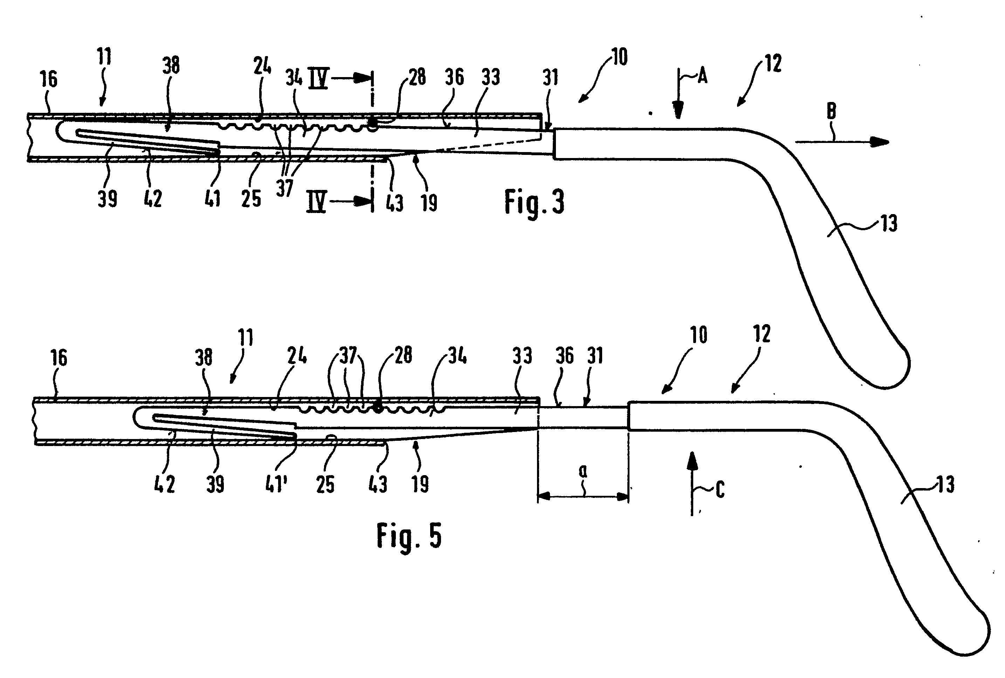

Anhand insbesondere der Fig. 3 und 5 sei nun der Vorgang der Längenverstellbarkeit des Bügels 10 beschrieben. Wie aus Fig. 1 hervorgeht, ist insbesondere der zweite Zwischenbereich 34 mit den Rasteinschnitten 37 durch die Wirkung des Federarmes 39 am Federteil 38 derart zur oberen Innenfläche 24 des Hohlprofils 16 des ersten Bügelteils 11 gedrückt, daß einer der Rasteinschnitte 37 die Rastnase 28 aufnimmt, so daß eine Relativbewegung des zweiten Bügelteils 12 gegenüber dem ersten Bügelteil 11 nicht mehr möglich ist. Diese Raststellung bleibt auch beim Tragen der Brille, da die Wirkung des Federteils 38 unterstützt wird. Drückt man nun unter Festhalten des ersten Bügelteils 11 im Bereich des Bügelendes 13 gemäß Pfeil A auf den zweiten Bügelteil 12, so wird der zweite Bügelteil 12 gegenüber dem ersten Bügelteil 11 um den innersten Endbereich der Oberkante 36 bzw. um den Auflagepunkt 41 des freien Endes des Federarmes 39 an der Innenfläche 25 der unteren Wand 18 des Hohlprofils 16 verschwenkt, so daß die Rastnase 28 aus dem betreffenden Rasteinschnitt 37 freikommt. Diese Schwenkbewegung erfolgt soweit, bis die Unterkante 42 des zweiten Bügelteils 12 an der Kante 43 des Hohlprofils 16 anliegt, an der die Schrägflächen 21 beginnen. Die Größe dieser Schwenkbewegung des zweiten Bügelteils 12 gegenüber dem ersten Bügelteil 11 reicht aus, daß nunmehr der zweite Bügelteil 12 gemäß Pfeil B gegenüber dem ersten Bügelteil 11 verschoben werden kann. Bspw. soll der Bügel 10 in seiner Länge vergrößert werden, und zwar um ein Maß a. Ist dies erreicht, so läßt man den zweiten Bügelteil 12 los, so daß er gemäß Pfeil C nunmehr um den aufgrund der Verstellbewegung verschobenen Anlagepunkt 41'

nach oben verschwenkt, was aufgrund der Wirkung des Federarmes 39 von selbst erfolgt. In dieser Stellung der Fig. 5 ist die Rastnase 28 in einem anderen Rasteinschnitt 37 aufgenommen. In diesem Zustand druckt der Federarm 39 wiederum insbesondere den mit den Rasteinschnitten 37 versehenen zweiten Zwischenbereich 34 des zweiten Bügelteils 12 gegen die Innenfläche 24 der oberen Wand 17 des Hohlprofils 16 des ersten Bügelteils 11.

Beim dargestellten Ausführungsbeispiel ist die Kante 43 des Hohlprofils 16 etwa unterhalb der Rastnase 28 angeordnet und das freie Ende des Federarmes 39 reicht etwa bis zu demjenigen Rasteinschnitt 37, der der maximal verstellbaren Länge des Bügels 10 entspricht. Da die Höhe des Federteils 38 des zweiten Bügelteils 12 in gekippter bzw. entriegelter Stellung gemäß Fig. 3 zwischen der Unterseite des freien Endes des Federarmes 39 und der Oberkante 36 am hinteren Ende des Federteils 38 größer ist als die lichte Höhe zwischen der Innenfläche 25 der unteren Wand 18 des Hohlprofils 16 und der Unterseite der Rastnase 28, ist es nicht möglich, den zweiten Bügelteil 12 aus dem ersten Bügelteil 11 bei eingesteckter Rastnase 28 herauszuziehen.

## Ansprüche

1. Längenverstellbarer Bügel (10) für Brillen, mit einem die Form eines im wesentlichen geschlossenen Hohlprofils (16) aufweisenden ersten Bügelteil (11) und einem im ersten Bügelteil (11) verschiebbar geführten zweiten Bügelteil (12) und mit einer mehrere Rasteinschnitte (37), mindestens eine Rastnase (28) und mindestens einen federnd vorgespannten Bereich (39) aufweisenden Rastvorrichtung, **dadurch gekennzeichnet,** daß der erste Bügelteil (11) die in das Hohlprofil (16) ragende Rastnase (28) und der zweite Bügelteil (12) der Rastnase (28) zugewandt die Rasteinschnitte (37) aufweist und daß am zweiten Bügelteil (12) eine sich an einem der Rastnase (28) abgewandten Bereich des Hohlprofils (16) abstützende vorgespannte Feder (39) vorgesehen ist, entgegen deren Wirkung der zweite Bügelteil (12) relativ zum ersten Bügelteil (11) zum Lösen der Rastvorrichtung bewegbar ist.

2. Bügel nach Anspruch 1, dadurch gekennzeichnet, daß der mit den Rasteinschnitten (37) versehene Bereich (34) des zweiten Bügelteils (12) und der mit der vorgespannten Feder (39) versehene Bereich (38) des zweiten Bügelteils (12) axial auseinanderliegen.

3. Bügel nach Anspruch 2, dadurch gekennzeichnet, daß die vorgespannte Feder (39) des zweiten Bügelteils (12) an dessen innerem freien Endbereich (38) vorgesehen ist, an den sich der mit den Rasteinschnitten (37) versehene Bereich (34) anschließt.

4. Bügel nach Anspruch 3, dadurch gekennzeichnet, daß die vorgespannte Feder (39) durch eine rückgeführte Verlängerung des inneren Endes (38) des zweiten Bügelteils (12) gebildet ist.

5. Bügel nach mindestens einem der vorhergehenden Ansprüche, dadurch gekennzeichnet, daß der erste Bügelteil (11) aus einem im Querschnitt flachen, länglichen Hohlprofil (16) ist und daß der zweite Bügelteil (12) aus einem flachen Bandfedermaterial (31) ist.

6. Bügel nach Anspruch 5, dadurch gekennzeichnet, daß die vorgespannte Feder (39) durch Stanzen des verbreiterten Endbereichs (38) des zweiten Bügelteils (12) gebildet ist.

7. Bügel nach Anspruch 5, dadurch gekennzeichnet, daß das Hohlprofil (16) des ersten Bügelteils (11) in einem Bereich seines Einsteckendes an der Unterseite (18) offen ist.

8. Bügel nach Anspruch 7, dadurch gekennzeichnet, daß der Beginn des offenen Bereichs der Unterseite (18) des Hohlprofils (16) etwa in Höhe der Rastnase (28) vorgesehen ist.

9. Bügel nach mindestens einem der vorhergehenden Ansprüche, dadurch gekennzeichnet, daß die Rastnase durch einen von außen in mindestens eine Bohrung (26,27) des Hohlprofils (16) gesteckten Stift (28) gebildet ist.

10. Bügel nach mindestens einem der Ansprüche 5 bis 9, dadurch gekennzeichnet, daß die lichte Weite des mit der Feder (39) versehenen Endbereichs (38) des zweiten Bügelteils (12) in dessen gekipptem und damit mit eingedrückter Federstellung versehenem Zustand größer ist als die lichte Höhe zwischen Rastnase (28) und Bodenbereich des Hohlprofils (16) des ersten Bügelteils (11).

Fig. 1

Fig. 2

Fig. 4

Fig. 3

Fig. 5

EP 0 396 110 A2